# EUROPEAN PATENT APPLICATION

(11) **EP 1 081 576 A1**
(43) Date of publication of application: **07.03.2001**
(21) Application number: 00305104.2
(22) Date of filing: 16.06.2000
(51) Int. Cl.: G06F 1/00

(54) **Computer access control systems**

(30) Priority: 04.09.1999 GB 9920810
(71) Applicant: Hewlett-Packard Company, Palo Alto, California 94304-1112 (US)
(72) Inventor: Casassa-Mont, Marco, Stoke Gifford, Bristol BS34 8BF (GB); Baldwin, Adrian, Downend, Bristol BA16 6LQ (GB)
(74) Representative: Lawrence, Richard Anthony

(57) **Abstract**

A computer system can be used by a plurality of permitted users (26), each of whom can play at least one of a plurality of permitted roles, and can run a plurality of applications (28). An access control system (10) is provided, comprising storing means (12) for storing: for each permitted user, attributes (42) of that user; for each permitted role, attributes (44) of that role; attributes (46) of a plurality of permitted associations between the permitted users and the permitted roles; for each application, attributes (48) of that application; and, for each application, at least one access control condition (50), referring to the attributes, that must be satisfied for access to be granted to that application. In the case where at least one of the applications is operable to perform at least one application operation, the storing means may additionally or alternatively store, for the or each such application operation, attributes (48) of that operation and at least one access control condition (50) that must be satisfied for access to be granted to that operation. Accordingly, a fine-grained access control system can be provided, which is focussed on the application level and/or application operation level using arbitrarily complex conditions associated with the applications and/or application operations and referring to the user's capabilities and, where appropriate, features of the applications.

## Description

This invention relates to access control systems for computer systems.

Recent trends suggest that the Internet will be increasingly extended from a simple information provision system to a platform for providing business services and applications enabling both outsourcing and a greater flexibility for collaborative working via applications accessible over the Internet. In this context, the service is the external provision of functionality provided by an application running on a server system.

Within this context it is important to have an access control system which defines individuals' rights in terms of the functions they need to perform as well as defining the context in which they are operating. The service providers need to provide a consistent security model underlying all their services (and irrespective of the actual applications they are running) such that users have a clear understanding of their rights and to ease the burden of managing the security of each service (and the underlying applications).

The administrator of the service provider system needs tools to create and enforce a security model at the application/service level, in order to:
- define who the users of the system are. The administrator might want to classify those users into groups according to their roles (employee, clerk, etc.) and associate some attributes to them. For example user's company, user's e-mail address, etc.;
- define which users (groups of users) can access the services (for example a trading share service) and under which conditions. Only the allowed users can actually "see" those services; and
- define which users (groups of users) can access service's operations (for example, quote shares, buy shares and sell shares in the case of the trading share service) and under which conditions.

The administrator might want to define arbitrarily complex access control conditions based on an aggregation of the user, their role, time, service's properties, etc. For example they might want to allow a user to buy shares only if the user is a "share trader", if they act on behalf of their employer, if they do not spend more than a predefined amount of money, if they charge their employer's account and if they access the service operation at a time between 9:00 and 17:00 on any day from Monday to Friday.

The administrator might want to have a flexible access control system where access control conditions can be changed according to new business/service needs without interrupting the service provision and furthermore without modifying and recompiling the applications' codes. In some cases they would also delegate part of the security administration task to other people.

The present invention, or at least specific features of it, aims to satisfy the above requirements.

In accordance with a first aspect of the present invention, there is provided a computer system which can be used by a plurality of permitted users, each of whom can play at least one of a plurality of permitted roles, and which can run a plurality of applications. The computer system has an access control system comprising storing means for storing: for each permitted user, attributes of that user; for each permitted role, attributes of that role; attributes of a plurality of permitted associations between the permitted users and the permitted roles; for each application, attributes of that application; and for each application, at least one access control condition (which is preferably defined as a logical expression), referring to the attributes, that must be satisfied for access to be granted to that application. The access control system also includes processing means for testing, in response to a request by a particular user playing a particular role to access a particular application, the validity of that request with reference to the respective access control condition(s) and the respective attributes and for granting or denying access to that application in dependence upon the result of that test. Accordingly, a fine-grained access control system can be provided, which is focussed on the application level using arbitrarily complex conditions associated with the applications and referring to the user's capabilities.

In accordance with a second aspect of the present invention, there is provided a computer system which can be used by a plurality of permitted users, each of whom can play at least one of a plurality of permitted roles, and which can run a plurality of applications, each of which applications can perform at least one application operation. The computer system has an access control system comprising storing means for storing: for each permitted user, attributes of that user; for each permitted role, attributes of that role; attributes of a plurality of permitted associations between the permitted users and the permitted roles; for each application operation, attributes of that operation; and, for each application operation, at least one access control condition, referring to the attributes, that must be satisfied for access to be granted to that operation. The access control also includes processing means for testing, in response to a request by a particular user playing a particular role to access a particular application operation, the validity of that request with reference to the respective access control condition(s) and the respective attributes and for granting or denying access to that operation in dependence upon the result of that test. Accordingly, an even more finely-grained access control system can be provided, which is focussed on the application operation level using arbitrarily complex conditions associated with the application operations and referring to features of the applications and the user's capabilities.

It will be appreciated that the features of the access control systems of the first and second aspects of the invention may be integrated in a single system.

In the context of the present invention, an attribute can be considered as a t-ple (that is, an aggregation of t separate entities) which consists of at least a name and an associated value. In preferred embodiments an attribute may be a 3-ple of name, value and type. Both users and roles are, in embodiments, modelled as a set of attributes: the set of attributes provides a description of the user or the role. An attribute differs from the conventional concept of a privilege or right. A conventional privilege or right is typically a single token or a label (eg Read, Write, BuyUpTo£2000) directly associated with an application or an access control system.

Preferably, at the start of a user session, the processing means is operable to create and store, with reference to the stored attributes, a user context for that user. Then, in response to a request as aforesaid, the processing means is operable to test the validity of that request with reference to the respective stored user context. Upon a change in the properties of at least one of the associations, roles or users, the system preferably provides for the respective user context(s) also to be changed according to a predefined policy. Accordingly, dynamic changing of users' capabilities at run time is possible. Furthermore, upon a change in the role of one of the users, the system preferably provides for the respective user context to be changed accordingly. Preferably, at the end of a user session, the respective stored user context is destroyed.

In response to a request by a user to commence a user session, the processing means is preferably operable to determine, with reference to the stored user attributes, whether to grant or deny the request for a user session. More specifically, in response to a request by a user to commence a user session with a specified role, the processing means is preferably operable to determine, with reference to the stored role and/or association attributes, whether to grant or deny the request for a user session.

At least one of the stored conditions may refer to a system variable, such as the time, in which case, in testing that condition, the processing means is preferably operable to refer to the current value of that system variable.

In the case where means are provided for storing a separate access control list of applications and/or operations and respective permitted users or roles, as in a conventional access control system, the processing means is preferably also operable to refer to the access control list in determining whether to grant or deny access to an application or operation. Accordingly, the access control system of the present invention can be integrated with conventional access control systems or lists.

The system preferably further includes at least one of the following management services: a user management service for changing the stored user attributes; a role management service for changing the stored role attributes; an association management service for changing the stored association attributes; an application management service for changing the stored application and operation attributes; and an access condition management service for changing the stored access control condition attributes.

Preferably, the stored conditions are stored separately from the applications and can be changed independently of the applications. Accordingly, changes can be made to the access control conditions without disruption of the applications.

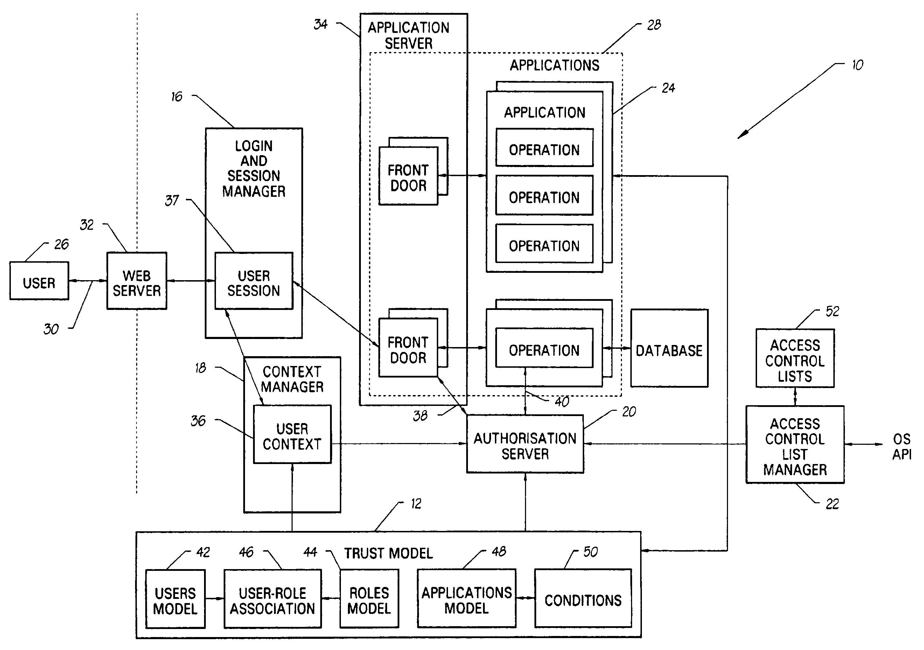

A specific embodiment of the present invention will now be described, purely by way of example, with reference to the accompanying drawing, which is a block diagram of a computer system embodying the present invention.

Referring to the drawing, the functional architecture of the access system 10 has two main components: a "trust model" 12; and a system run-time environment. The system run-time environment includes a login and session manager 16, a context manager 18, an authorisation server 20, an optional access control list manager 22 and a management services application 24.

The system 10 is deployed in a platform that allows remote users 26 to access secured applications and services 28 (hereinafter simply termed "applications") through the Internet 30. A web server 32 provides the mechanisms to manage the interaction with Internet users while an application server 34 supports the provision of the applications 28.

The trust model 12 provides a description of users, their roles and under which conditions they can access the secured applications. That model is used by the run-time environment to enforce the access control.

At run-time, each authenticated user is associated to a "user context" 36 (for the whole duration of the user session) containing information about user's capabilities. Those capabilities are defined according to user's attributes and their roles. The authorisation server 20 authorises or rejects a user request 38,40 to access a secured application by evaluating access control condition against user's capabilities. This control is made both at the application front-door 38 and at the application's operations level 40.

The trust model 12 is based on both users and roles each of which have a set of properties which can be used to provide access to individual services or functions according to access control conditions associated to a service description or model.

A user representation or model 42 in the trust model 12 contains a number of required attribute fields such as the user name, their organisation, etc., along with their values. The user representation 42 also contains various pieces of management information, which control a user's ability to login. For example; an expiration date, or a condition which must be satisfied (e.g. between 8 am and 6 pm). Additional attributes can be added to allow custom capabilities for a user. For example a user might have a property allowing them to spend on a particular account. The following is an example of a user representation, in which the first section contains core attributes, the middle section contains management attributes, and the last section contains any customisable attributes:

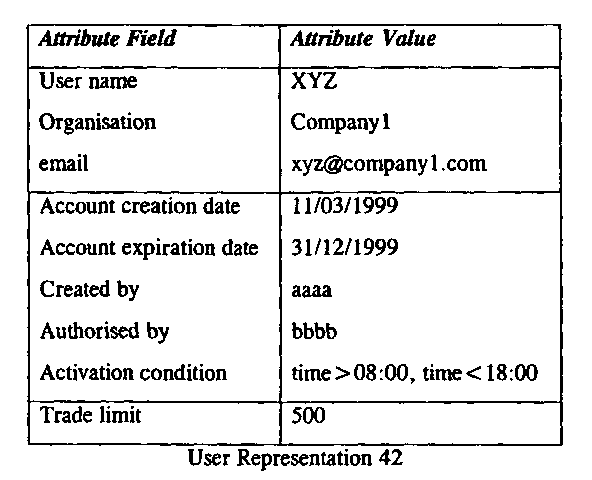

A role model or representation 44 in the trust model 12 is similar to the user model 42 in that it consists of a set of required and optional properties associated with each role. As with users there is a set of management properties to control whether a role can become activated. Further management conditions can be supported to define properties that a user must have before they can be allocated to a role, as in the following example:

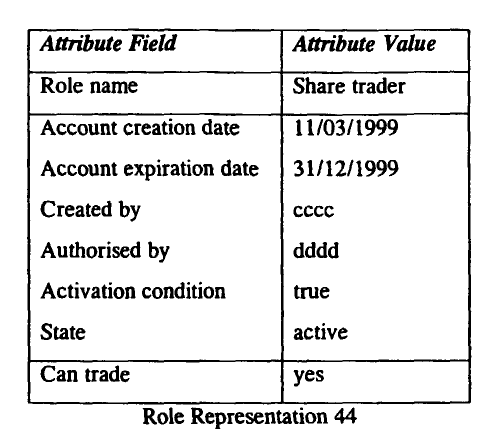

In some known role based access control systems, all access is made through roles, and as such it is necessary to create a number of very specific roles (e.g. a finance clerk in company X). By contrast, the trust model 12 uses roles in a more general sense; the rights of a user are determined by the combination of the attributes of the user and the roles that they play at run-time, i.e. the user context 36.

The system does not implement any role hierarchy, because role management is intentionally maintained as simple as possible and avoids inheritance-related side effects. Reliance is made on the user-role association and user context mechanisms to model, in a proper way, users' capabilities.

The trust model 12 also contains information about which users are assigned to particular roles. As with the user and role representations 42,44, a user-role association 46 contains information and conditions on a user playing that role. In the following example, a particular user is allowed to play a particular role from Monday to Friday:

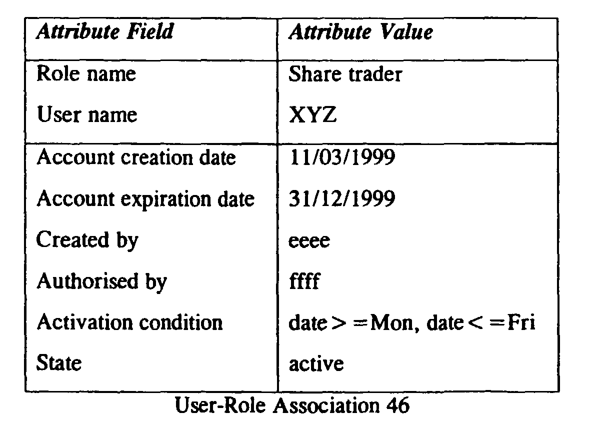

The set of roles a user can (potentially) play at run-time is defined by these user-role associations 46.

The trust model 12 also includes a representation or model 48 of applications and operations that can be secured. The applications model 48 contains a definition of the application interface; that is, each operation that can be performed along with information identifying the associated data. For example a trading share service may have the following operations:
- Quote (share_name, amount)
- Buy (share_name, amount, account)
- Sell (share_name, amount, account)

The above service could be modelled as:

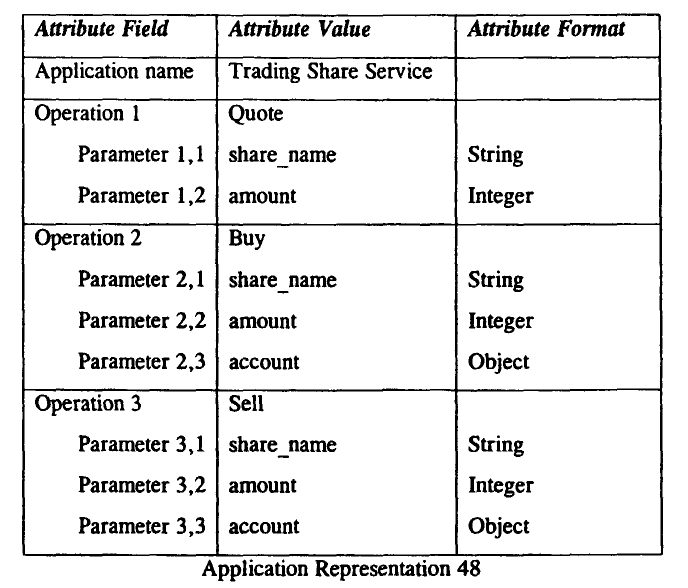

The trust model 12 as described so far has consisted of a way to represent users and the roles that they play (forming a set of properties to represent the user's capabilities) along with a description of the operations that can be performed by each application. These two concepts are linked by access control conditions 50, which act as a flexible form of access control list, and which are stored in the trust model 12.

Each condition 50 takes the form of a logical expression that must be true for access to be granted. Each condition 50 can refer to information about the user making the request (user context, the content of which is determined at run time), a system object (containing global information, such as time), the application being used and where appropriate to the operation and objects representing data involved in the operation. The condition can then specify tests on these objects or combinations of these objects. A simple extension would allow the condition to refer into the application set to derive more information.

A simple example is: *The "trading share service" can be accessed if the user has the role "share trader"*. The condition associated to the "trading share service" would be:
UserContext.hasRole (Share trader)
where "UserContext" is a reserved keyword. The content of the user context 36 is created at the user's login time by aggregating the user attributes and the attributes of all the roles they are playing.

Another example specifies a condition associated to the operation "buy shares" on a company's account, given the role of "share trader" where the individual represents the company who owns the account and the amount of money a share trader is allowed to spend is defined on individual's basis. The application/service operation "Buy (share_name, amount, account)" will be associated with a condition 50 such as:
(UserContext.hasRole (Share trader)) AND
(UserContext.hasProperty (Can trade)) AND
(UserContext.company = = account.owning_company) AND
(UserContext.Trade limit > amount.value)

The conditions described above are a powerful mechanism to define complex access control constraints at a high level of abstraction. In spite of that, in some cases, security constraints can be successfully described just using simple, conventional access control lists. Furthermore, access control lists are sometimes the only security constraints that can be managed within existing systems (like operating systems, database systems, file systems, etc.). An access control list usually contains simple constraints made by triples:
〈Resource〉 - 〈User/Group〉 - 〈Allowed Operation〉

Each triple defines who (user/group) can access what (resource) and which operation is allowed. For example, thousands of those triples can be associated with files within a file system (at the level of the operating system).

There may be little, or no, point in modelling all of these simple constraints using the conditions 50 in the trust model 12 (even if it can be done in a straightforward way) because of performance, authoring and consistency reasons. Accordingly, the access control system is flexible enough to interact with externally managed access control lists 52 using access control conditions 50 which are integrated with constraints defined in the external access control lists 52.

For example, considering again the "service operation" described previously:
Buy (share_name, amount, account)

Suppose that "account" has been implemented as a record, stored in a database table and secured using the database security system (for example a discretionary access control system based on access control lists). Consider the following access control condition:
(AclManager.hasPermission ( AclManagerRef, UserContext.userName, OperationRequest(account.id)) AND
(UserContext.hasRole (Share trader)) AND
(UserContext.hasProperty (Can Trade)) AND
(UserContext.hasProperty (company) = = OperationRequest (account).hasProperty ( owning_company)) AND
(UserContext.(Trade limit) > OperationRequest (amount))

The above condition requires the user to have the right to access the "account" record, in addition to other constraints. "AclManager" is an abstraction of an external access control system. At the interpretation time, the system can interact with the external access control system and gather access control information. The result is automatically integrated with the evaluation of other part of the condition.

As an integration example, the access control list manager 22 is used, and the management of access control lists is delegated to it at an opportune level of abstraction (according to requirements dictated by the managed services/applications).

This hybrid approach of combining logical conditions 50 with external access control lists 52 is powerful enough to balance the need of expressiveness with the performance and authoring issues.

The system run-time environment is the part of the access control system that provides the necessary infrastructure to secure applications according to the descriptions in the trust model 12. As mentioned above, the main components are as follows:
- Login and session manager 16;
- User context manager 18;
- Authorisation server 20;
- Access control list manager (optional) 22; and
- Management services 24.

The login process of the login and session manager 16 is used to initiate a session 37 with the user 26. Each user 26, after being authenticated, is requested to access a login service where the user 26 selects the roles they wish to play. The login service checks that the user 26 is able to play those roles. The user context manager 18 is therefore invoked in order to create a user context 36 that will be associated to the user session 37.

A logout service of the login and session manager 16 allows the user 26 to terminate their session in which case the user context manager 18 removes the respective user context 36.

The main goal of the user context manager 18 is to create and maintain user contexts 36. A user context 36 is an aggregation of attributes from the user representation 42 and all their (selected) roles; it basically defines the "capabilities" of a user 26 given a particular user session 37. It can be modelled as a structure containing scoped attributes with their values, for example:

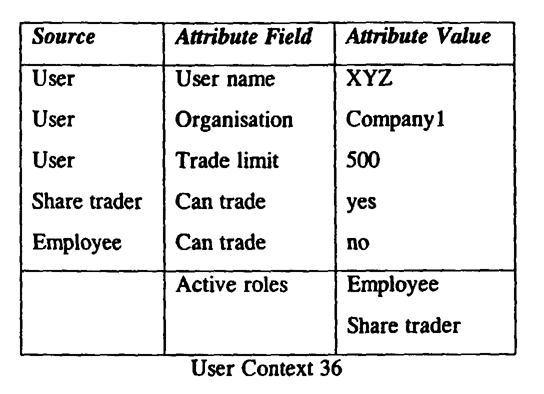

The user context manager 36 can be queried about the attributes that a user 26 has for that particular session 37 (given the user context reference). The authorisation server 20 will usually perform this querying.

Updates of user contexts 36 are necessary when data in the user, role and user-role associations 42,44,46 are updated such that a user 26 does not retain capabilities that have been removed (or gains new capabilities).

The authorisation server 20 forms the security enforcement point and receives requests 38,40 for a given user session 37 to access an application or to perform a particular application operation or even to execute a security condition. The authorisation server 20 returns a Boolean value specifying whether or not the access request is valid.

The authorisation server 20 can be asked for two basic requests:
- a request 38 to access an application (front-door level request);
- a request 40 to access an operation within an application.

In the former case, the authorisation server 20 receives a request 38 for a user session 37 to access a named application. It has to find all of the conditions 50 associated with accessing the named application and validate the user 26 against these conditions. The authorisation server 20 will receive the reference to the user context 36 generated at login time and will refer to the user context manager 18 to find the user's roles and properties.

The latter case (application operation request 40) is an extension of this in that now the authorisation server 20 must retrieve conditions 50 referring to the particular operation of the application. These conditions 50 can refer not only to properties associated to a particular user 26 but also to data associated with the application operation. This data must be from a standard type (e.g. String, Integer) or have a standard interface implemented such that the authorisation server 20 can find the appropriate information on executing a condition 50.

A major part of the authorisation server 20 is a condition execution engine, which checks all relevant conditions.

The authorisation server 20 accesses the conditions 50 stored in the trust model 12; for performance reasons this information could be loaded and maintained in memory in structures allowing for efficient searching. When conditions 50 are updated, as they will be from time to time, the authorisation server 20 needs to update its data structures. To do this, the authorisation server just reloads the new trust model information, or part of it, without any major service interruption. The application model 48 describes what information can be referred to from each application and operation request and forms an important piece when parsing and checking conditions.

An optional feature is to manage simple access control lists 52, which can store simple access control constraints having the following format:
〈Resource〉 - 〈User/Group〉 - 〈Allowed Operation〉

Each triple defines who (user/role) can access what (resource) and which operation is allowed. All those triples could be cached in memory (for performance reasons) and updated when needed.

The access control list manager 22 provides an API that can be used to verify if a user/role can perform an operation on a resource. That API is accessible from the authorisation server 20 so that the condition execution engine can easily interpret hybrid conditions.

The access control list manager 22 is used when there is the need to manage (in an efficient way) large but simple access control lists 52 and combine them with the more complex constraints which can be provided by the trust model 12.

This hybrid approach provides the flexibility to define the access control at the right level of abstraction, ranging from a pure condition-based access control to a pure access control list-based model within the same security framework.

The previously described components form the runtime access control system but a set of management services 24 are also essential to allow users to describe the access control requirements for a particular set of applications. The management services 24 ensure that the security model is dynamic and changes can be made as users and organisations needs change. These services use the access control system themselves allowing a complex form of delegation of user, role and application access management amongst the users of the application set as well as the application administrators.

The management services 24 are:
- Application registration. This allows new applications to be added and therefore secured, and it is used to enter the application description. This service also allows for the updating and removal of applications.
- User management. This allows users to be added, to have their properties modified or for the user to be removed.
- Role management. This allows for the creation, modification and deletion of roles.
- User-role association. This service allows users to be assigned to roles and for that assignment to be revoked.
- Service access control. This service allows the access control conditions to be written and associated with users, roles, applications and application operations. Update functions allow the access control conditions to be updated when necessary.

The system run-time environment is integrated with the server-side, both at the level of the web server 32 and at the level of the application server 34, in the following ways:
1. The login and session manager 16 is integrated with the web server 32. Each time a user 26 logs in, a new user session 37 is created and the user context manager 18 is invoked in order to build a respective user context 36. The user session information will be available to all the environment components.
2. An access control call 38 to the authorisation server 20 is associated to each secured application 28. The goal is to provide front-door functionality. Each time a user 26 tries to access an application 28, their attempt is intercepted and a request is made to the authorisation server 20. The authorisation server 20 will check the request against the access control conditions 50 using the user context 36 and will grant or deny the access.
3. An access control call 40 to the authorisation server 20 is associated to each secured application operation. As before, the goal is to intercept user's attempts to access an operation and invoke the authorisation server 20 to get the access authorisation.
4. The authorisation server 20 may optionally interact with the access control list manager 22 to get the access authorisation.
5. Management services 24 are deployed as the other applications and they are secured using the same mechanisms described at points 2 and 3 above.

The access control calls 38,40 at the application level are necessary to enforce the access control. Nevertheless they are quite simple. For example, an access control call 38 at the application front-door can be represented by:
If (AuthorisationServer.canAccess (sessionID, "application/service name")) Then
   〈access to the application /service〉
Else
   〈deny access〉
Endif
Similarly, an access control call 40 for an application operation can be represented by:
If (AuthorisationServer.canAccess (sessionID, "application/service name", "operation name", objects)) Then
   〈access to the application /service operation〉
Else
   〈deny access〉
Endif
where "sessionID" is a unique identifier for the user session 37 and "objects" is a set of objects implementing a common interface (integers, strings, complex objects) that must be passed to the authorisation server 20.

Access control calls 38,40 need to be written only once at the development time. All the access control changes will be made on the access control conditions 50 which are completely detached from the applications 28. Eventually the insertion of access control calls could be automated either using pre-processors that add standard wrappers into the application code or application server features.

A Java prototype of the access control system has been successfully implemented. It uses RMI objects instead of an application server 34 in order to provide more freedom for experimentation. Each RMI object represents an application that can be accessed from the web server 32 through servlets. Servlets and RMI objects embed the access control calls 38,40 to the authorisation server 20. Each servlet provides not only the application presentation layer but also the "front-door" access control call 38. Access control calls have been embedded within each RMI object to secure the access to the application operations. All the management services 24 have been implemented following the same philosophy. The choice of RMI objects does not affect either the trust model 12 or the system run-time environment; both of them can be easily deployed in other environments as they are independent from the infrastructure that provides applications to the users. Some experiments have already been done using the BEA/Weblogic Tengah application server.

It will be appreciated that the embodiment of the invention described above provides the following important features:-
- a flexible model of the users of the system and their roles;
- security at the application and operation level; an access control system that allows an administrator to model and enforce fine-grained access control at the application level;
- the possibility to define arbitrarily complex access control conditions;
- the possibility to integrate access control conditions with existing access control mechanisms;
- the possibility to modify access control conditions in a flexible way at run-time, without modifying the application's code and without having service disruptions;
- the possibility to delegate access control administration when required.

It should be noted that the embodiment of the invention has been described above purely by way of example and that many modifications and developments may be made thereto within the scope of the present invention.

## Claims

1. A computer system which can be used by a plurality of permitted users (26), each of whom can play at least one of a plurality of permitted roles, and which can run a plurality of applications (28), the computer system having an access control system (10) comprising:
storing means (12) for storing:
for each permitted user, attributes (42) of that user;
for each permitted role, attributes (44) of that role;
attributes (46) of a plurality of permitted associations between the permitted users and the permitted roles;
for each application, attributes (48) of that application; and
for each application, at least one access control condition (50), referring to the attributes, that must be satisfied for access to be granted to that application; and
processing means (20) for testing, in response to a request (38) by a particular user playing a particular role to access a particular application, the validity of that request with reference to the respective access control condition(s) and the respective attributes and for granting or denying access to that application in dependence upon the result of that test.

2. A system as claimed in claim 1, wherein:
at least one of the applications is operable to perform at least one application operation;
the storing means stores, for the or each such application operation, attributes (48) of that operation and at least one access control condition (50) that must be satisfied for access to be granted to that operation; and
the processing means is operable to test, in response to a request (40) by a particular user playing a particular role to access a particular application operation, the validity of that request with reference to the respective access control condition(s) and the respective attributes and for granting or denying access to that operation in dependence upon the result of that test.

3. A computer system which can be used by a plurality of permitted users (26), each of whom can play at least one of a plurality of permitted roles, and which can run a plurality of applications (28), each of which applications can perform at least one application operation, the computer system having an access control system (10) comprising:
storing means (12) for storing:
for each permitted user, attributes (42) of that user;
for each permitted role, attributes (44) of that role;
attributes (46) of a plurality of permitted associations between the permitted users and the permitted roles;
for each application operation, attributes (48) of that operation; and
for each application operation, at least one access control condition (50), referring to the attributes, that must be satisfied for access to be granted to that operation; and
processing means (20) for testing, in response to a request (40) by a particular user playing a particular role to access a particular application operation, the validity of that request with reference to the respective access control condition(s) and the respective attributes and for granting or denying access to that operation in dependence upon the result of that test.

4. A system as claimed in any preceding claim, wherein:
at the start of a user session (37), the processing means (18) is operable to create and store, with reference to the stored attributes, a user context (36) for that user; and
in response to a request as aforesaid, the processing means is operable to test the validity of that request with reference to the respective stored user context.

5. A system as claimed in claim 4, wherein upon a change in the properties of at least one of the associations, roles or users, the respective user context(s) is/are changed according to a predefined policy.

6. A system as claimed in claim 4 or 5, wherein upon a change in the role of one of the users, the respective user context is changed accordingly.

7. A system as claimed in any of claims 4 to 6, wherein, at the end of a user session, the respective stored user context is destroyed.

8. A system as claimed in any preceding claim, wherein, in response to a request by a user to commence a user session, the processing means (16) is operable to determine, with reference to the stored user attributes, whether to grant or deny the request for a user session.

9. A system as claimed in any preceding claim, wherein, in response to a request by a user to commence a user session with a specified role, the processing means is operable to determine, with reference to the stored role and/or association attributes, whether to grant or deny the request for a user session.

10. A system as claimed in any preceding claim, wherein:
at least one of the stored conditions refers to a system variable; and
in testing that condition, the processing means is operable to refer to the current value of that system variable.

11. A system as claimed in any preceding claim, wherein:
means (52) are provided for storing a separate access control list of applications and/or operations and respective permitted users or roles;
the processing means (20,22) is also operable to refer to the access control list in determining whether to grant or deny access to an application or operation.

12. A system as claimed in any preceding claim, further including at least one of the following:
a user management service (24) for changing the stored user attributes;
a role management service (24) for changing the stored role attributes;
an association management service (24) for changing the stored association attributes;
an application management service (24) for changing the stored application and operation attributes; and
an access condition management service (24) for changing the stored access control condition attributes.

13. A system as claimed in any preceding claim, wherein each of the conditions (50) is defined as a logical expression.

14. A system as claimed in any preceding claim, wherein the stored conditions are stored separately from the applications and can be changed independently of the applications.
